# EUROPEAN PATENT APPLICATION

(11) **EP 3 937 485 A1**
(43) Date of publication of application: **12.01.2022**
(21) Application number: 20824068.9
(22) Date of filing: 29.05.2020
(51) Int. Cl.: H04N 5/45, H04N 5/76

(54) **PHOTOGRAPHING METHOD AND APPARATUS**

(71) Applicant: Beijing Xiaomi Mobile Software Co., Ltd. Nanjing Branch, Jianye District Nanjing Jiangsu 210019 (CN); Beijing Xiaomi Mobile Software Co., Ltd., Beijing 100085 (CN)
(72) Inventor: WU, Xiaojun, Beijing 100085 (CN); XING, Daming, Beijing 100085 (CN)
(74) Representative: Hughes, Andrea Michelle
(86) International application number: PCT/CN2020/093531
(87) International publication number: WO 2021/237744

(57) **Abstract**

Capturing methods and apparatuses are provided according to the present disclosure. The method is applicable to an electronic device, the electronic device includes a screen and a camera, and the method includes: obtaining an image captured during capturing process, obtaining a target pop-up comment matching image information of the image, and displaying the image and the target pop-up comment, thereby increasing the interest and interaction at the capturing stage, and improving the user's capturing experience.

## Description

### TECHNICAL FIELD

The present disclosure relates to field of computer communications, and in particular, to capturing methods and apparatuses thereof.

### BACKGROUND

Some electronic devices are installed with cameras, and thus have a capturing function. Currently, after starting a camera, an electronic device displays an image captured by the camera on a screen, and performs capturing after receiving a capturing instruction input by a user, so as to obtain a photograph or a video.

The existing capturing method is simpler, and the interestingness of the capturing process is poor, and the user experience is poor.

### SUMMARY

To overcome the problems in the related art, embodiments of the present disclosure provide a method and an apparatus for capturing method and device are provided.

According to a first aspect of the embodiments of the present disclosure, a capturing method is provided, applicable to an electronic device, and the method includes:
obtaining an image captured during capturing process;
obtaining a target pop-up comment matching image information of the image;
displaying the image and the target pop-up comment.

In an embodiment, the image information includes at least one of: image data, capturing scene information, or image classification information.

In an embodiment, the image information includes the image classification information, which is obtained by one of:
in case where the image classification information includes content category information, determining the content category information of the image according to a content of the image; or
in case where the image classification information includes scene classification information, determining the capturing scene information of the image according to the content of the image, and determining the scene classification information corresponding to the capturing scene information.

In an embodiment, the obtaining of a target pop-up comment matching the image information of the image includes one of:
sending the image information to a server, such that the server obtains the target pop-up comment matching the image information, and receiving the target pop-up comment from the server; or
determine whether the image information conforms a preset image information, and if the image information conforms the preset image information, obtaining the target pop-up comment from a pop-up comment library corresponding to the preset image information..

In an embodiment, the method further includes:
generating a capturing file based on the image and the target pop-up comment;
store the capturing file.

In an embodiment, the generating of the capturing file based on the image and the target pop-up comment includes one of:
writing the target pop-up comment into an image file of the image to generate the capturing file; or
writing the target pop-up comment into a text, and combining the image file of the image and the text, to generate the capturing file.

According to a second aspect of the embodiments of the present disclosure, a capturing method is provided, applicable to a server, and the method includes:
obtaining image information of an image captured by the electronic device;
determining a target pop-up comment matching the image information;
sending the target pop-up comment to the electronic device.

In an embodiment, the obtaining of the image information of the image captured by the electronic device includes one of:
receiving the image information from the electronic device; or
receiving the image captured from the electronic device, and determining the image information of the image.

In an embodiment, the determining of the target pop-up comment matching the image information includes one of:
determining the target pop-up comment corresponding to the image information according to a pre-established first correspondence between image information and pop-up comments; or
determining image information type corresponding to the image information, and determining the target pop-up comment corresponding to the image information type according to a pre-established second correspondence between the image information types and the pop-up comments.

In an embodiment, the method further includes:
determining a target video, wherein the target video includes pop-up comments;
obtaining a target image frame set from the target video;
extracting the pop-up comments from the target image frame set;
stablishing the second correspondence between the image information types and the pop-up comments of the target image frame set.

In an embodiment, the obtaining of the target image frame set from the target video includes one of:
determining that image information types of multiple frames of images continuously played in the target video are the same, and obtaining the target image frame set based on the multiple frames of images; or
obtaining images with the same image information type from the target video, and obtaining the target image frame set based on the images with the same image information type.

According to a third aspect of the embodiments of the present disclosure, a capturing apparatus is provided, applicable to an electronic device, and the apparatus includes:
an image obtaining module, configured to obtain an image captured during capturing process;
an information obtaining module, configured to obtain a target pop-up comment matching the image information of the image;
an information displaying module, configured to display the image and the target pop-up comment

In an embodiment, the image information includes at least one of: image data, capturing scene information, or image classification information.

In an embodiment, the image information includes the image classification information, and the information obtaining module includes one of:
a first information determining sub-module, configured to, in case where the image classification information includes content category information, determine the content category information of the image according to a content of the image; or
a second information determining sub-module, configured to, in case where the image classification information includes scene classification information, determine the capturing scene information of the image according to the content of the image, and determine the scene classification information corresponding to the capturing scene information.

In an embodiment, the information obtaining module includes one of:
a sending sub-module, configured to send the image information to a server, such that the server obtains the target pop-up comment matching the image information, and receiving the target pop-up comment from the server; or
an obtaining sub-module, configured to determine whether the image information conforms the preset image information, and if the image information conforms the preset image information, obtain the target pop-up comment from a pop-up comment library corresponding to the preset image information.

In an embodiment, the apparatus further includes: a file generating module and a file storing module.

The file generating module is configured to generate a capturing file based on the image and the target pop-up comment.

The file storing module is configured to store the capturing file.

In an embodiment, the file generation module includes one of:
an information writing sub-module, configured to write the target pop-up comment into an image file of the image to generate the capturing file; or
a text combining sub-module, configured to write the target pop-up comment into a text, and combine the image file of the image and the text, to generate the capturing file.

According to a fourth aspect of the embodiments of the present disclosure, a capturing apparatus is provided, applicable to a server, and the apparatus includes:
an information obtaining module, configured to obtain image information of an image captured by the electronic device;
an information determining module, configured to determine a target pop-up comment matching the image information;
an information sending module, configured to send the target pop-up comment to the electronic device.

In an embodiment, the information obtaining module includes one of:
an information receiving sub-module, configured to receive the image information from the electronic device; or
an information determining sub-module, configured to receive the image captured from the electronic device, and determine the image information of the image.

In an embodiment, the information determining module includes one of:
a first pop-up comment determining sub-module, configured to determine the target pop-up comment corresponding to the image information according to a pre-established first correspondence between image information and pop-up comments; or
a second pop-up comment determining sub-module, configured to determine image information type corresponding to the image information, and determine the target pop-up comment corresponding to the image information type according to a pre-established second correspondence between the image information types and the pop-up comments.

In an embodiment, the apparatus further includes:
a video determining module, configured to determine a target video, wherein the target video includes pop-up comments;
a set obtaining module, configured to obtain a target image frame set from the target video;
an information extracting module, configured to extract the pop-up comments from the target image frame set;
a relationship establishing module, configured to establish the second correspondence between the image information types and the pop-up comments of the target image frame set.

In an embodiment, the set obtaining module includes one of:
a first set obtaining sub-module, configured to determine that image information types of multiple frames of images continuously played in the target video are the same, and obtaining the target image frame set based on the multiple frames of images; or
a second set obtaining sub-module, configured to obtain images with the same image information type from the target video, and obtaining the target image frame set based on the images with the same image information type.

According to the fifth aspect of the embodiments of the present disclosure, a non-transitory computer-readable storage medium is provided, on which a computer program is stored, wherein the computer program is executed by a processor to perform the method according to any one of the above-mentioned embodiment of the first aspect.

According to a sixth aspect of the embodiments of the present disclosure, a non-transitory computer-readable storage medium is provided, on which a computer program is stored, wherein the computer program is executed by a processor to perform the method according to any one of the above-mentioned embodiment of second aspects.

According to a seventh aspect of the embodiments of the present disclosure, an electronic device is provided, which includes:
a processor;
a memory for storing executable instructions that is executable by the processor to perform operations including;
obtaining an image captured during capturing process;
obtaining a target pop-up comment matching image information of the image;;
displaying the image and the target pop-up comment.

According to an eighth aspect of the embodiments of the present disclosure, a server is provided, which includes:
a processor;
a memory for storing executable instructions that is executable by the processor;
where, the processor is configured to:
obtain image information of an image captured by the electronic device;;
determine a target pop-up comment matching the image information;
send the target pop-up comment to the electronic device.

The technical solutions provided in embodiments of the present disclosure may include the following beneficial effects.

In the embodiments of the present disclosure, the electronic device obtains the image captured during the capturing process, obtains a target pop-up comment matching image information of the image, and displays the image and the target pop-up comment, thereby increasing the interest and interaction at the capturing stage, and improving The user's capturing experience.

It shall be appreciated that the above general descriptions and the following detailed descriptions are merely illustrative and explanatory and cannot limit the present disclosure.

### BRIEF DESCRIPTION OF DRAWINGS

In order to illustrate the technical solutions in the embodiments of the present invention more clearly, the accompanying drawings for describing the embodiments will be briefly introduced below. Apparently, the accompanying drawings in the following description are merely some embodiments of the present invention, and for a person skilled in the art, other drawings can be obtained according to these accompanying drawings without creative efforts.
Fig. 1 is a flowchart of a capturing method according to an exemplary embodiment.
Fig. 2 is a diagram of an image displayed on a screen according to an exemplary embodiment.
Fig. 3 is a flowchart of another capturing method according to an exemplary embodiment.
Fig. 4 is a block diagram of a capturing apparatus according to an exemplary embodiment.
Fig. 5 is a block diagram of another capturing apparatus according to an exemplary embodiment.
Fig. 6 is a block diagram of an electronic device according to an exemplary embodiment.
Fig. 7 is a block diagram of a server according to an exemplary embodiment.

### DETAILED DESCRIPTION OF THE EMBODIMENTS

Examples will be described in detail here with the examples thereof expressed in the drawings. Where the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The term used in the present disclosure is for the purpose of describing particular examples only and is not intended to limit the present disclosure. As used in this disclosure and the appended claims, the singular forms "a", "an" and "the" are intended to include the plural forms as well, unless the context clearly indicates otherwise. It should also be understood that the term "and/or" as used herein refers to and includes any and all possible combinations of one or more of the associated listed items.

It shall be understood that, although the terms "first", "second", "third" and the like may be used herein to describe various information, the information should not be limited by these terms. These terms are only used to distinguish one category of information from another. For example, without departing from the scope of the present disclosure, first information may be referred as second information; and similarly, second information may also be referred as first information. As used herein, the term "if' may be interpreted as "when" or "upon" or "in response to determining" depending on the context.

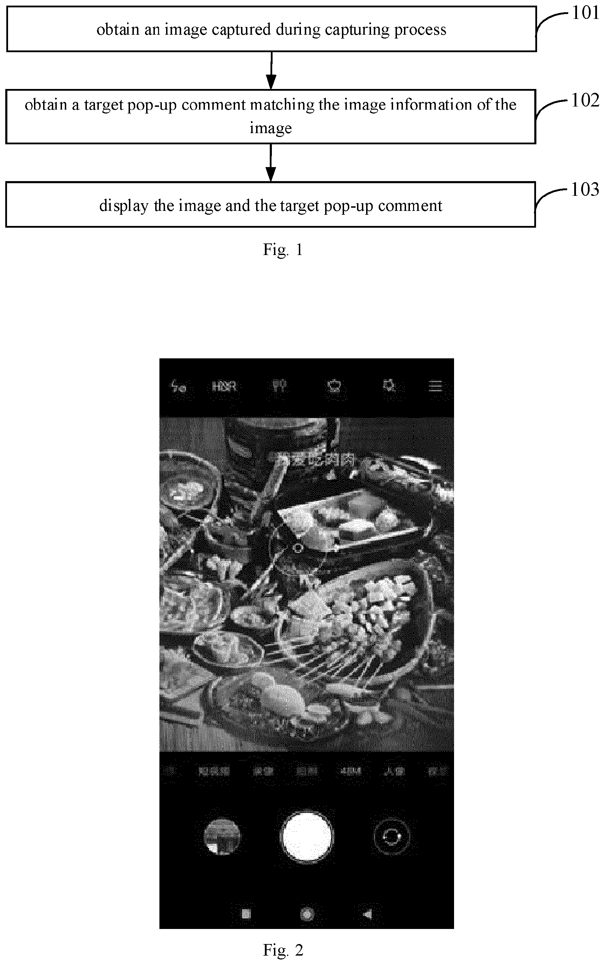

Fig. 1 is a flowchart of a capturing method according to an exemplary embodiment. The method shown in Fig. 1 is applicable to an electronic device, and the method includes the following steps.

In step 101, an image captured during capturing process is obtained.

In the embodiment of the present disclosure, the electronic device is installed with a screen and a camera, and has a display function and a capturing function. In an example, the method is applicable to a variety of suitable electronic devices, such as mobile phones, tablets, cameras, cameras, and the like.

For an electronic device such as a mobile phone and a tablet, a camera application is installed on the electronic device. After the camera application is started, a camera thereon is enabled and used for acquiring an image. For an electronic device such as a camera and a webcam, the device is dedicated to image capturing. After the electronic device is started, a camera thereon is enabled and used for acquiring an image.

The electronic device may obtain the image captured by the camera in the capturing process, or the electronic device may obtain the image captured by the camera in the capturing video process.

The obtained image in the step may be a preview image in a capturing process, or may be an image obtained after a user inputs a capturing instruction.

In step 102, a target pop-up comment matching image information of the image is obtained.

After acquiring an image, the electronic device obtains image information of the image. Multiple types of image information are provided, for example, the image information may include at least one of: image data, capturing scene information or image classification information. In the disclosure, the pop-up refers to a website interaction mechanism; the pop-up indicates that a user may make a comment on works such as a video, an image, and the comment may fly through the works as flow subtitles and be seen by another user.

Multiple types of image data are provided, for example, the image data may include at least one of: image per se, image color data, or image brightness data, or the like.

The capturing scene information indicates a specific capturing scene of the image.

Image classification information indicates classification of an image. Multiple types of image classification information are provided, for example, scene type information, content category information, etc. The scene type information indicates the type of the capturing scene corresponding to the image, and the content type information indicates the type of the capturing content corresponding to the image.

Multiple kinds of scene type information are provided, for example, an indoor scene, an outdoor scene, a food scene, a landscape scene, etc.

The classification criteria for the content category information are multiple, for example, species of an capturing object, attribute information of the capturing object, appearance of the capturing object, and the like. In an example, the capturing object may be divided according to the species, and the obtained content category information may include a person, an animal, an item, a food, etc. In another example, the attribute information of the capturing object may include gender, age, height, weight, appearance, etc. , and the capturing object is divided according to the attribute information of the capturing object, and the content category information may include men, women, children, adults, elderly, good lookings, bad lookings, etc. In another example, the capturing object is divided according to the appearance, and the obtained content category information may include a circle, a square, a triangle, a rule graph, an irregular graph, etc.

The electronic device may obtain image information by means of image recognition, network model, etc.

In an embodiment, methods for the electronic device to obtain image classification information of an image are provided. In a first acquiring method, in a case where the image classification information includes the content classification information, the content classification information of the image is determined according to the content of the image. In a second acquiring method, in a case where the image classification information includes scene classification information, the capturing scene information of the image is determined according to the content of the image, and the scene classification information corresponding to the capturing scene information is determined.

For the second acquiring method, for example, during the process of capturing a food, the electronic device determines, according to the contents of the image, that the food is included in the image, and determines the food scene corresponding to the food.

In an embodiment, a pop-up comment corresponding to different image information is different.

The electronic device may obtain the target pop-up comment matching the image information in a variety of ways. For example, after obtaining the image information, the electronic device may send the image information to a server, such that the server obtains a target pop-up comment matching the image information, and the electronic device receives the target pop-up comment from the server.

When the image information includes the image per se, the electronic device may send the image to the server, the server may directly determine a target pop-up comment matching the image, or the server may determine at least one of image color information, image brightness information, capturing scene information or image classification information of the image, and determine a target pop-up comment which matches such information.

When the image information includes one or more of image color information, image brightness information, capturing scene information, and image classification information, the electronic device sends such information to the server, and the server determines a target pop-up comment which matches such information.

In the above embodiment, the operation of determining the target pop-up comment matching the image information is performed by the server, reducing the operation pressure of the electronic device, and the electronic device does not store the pop-up comments, reducing the storage load of the electronic device.

In another example, the electronic device locally stores a pop-up comment library, and the electronic device may obtain the target pop-up comment matching the image information from the locally stored pop-up comment library.

In some cases, different pop-up comment libraries corresponding to different image information are different. For example, a pop-up comment library about food is established for food scenes, and a pop-up comment library about landscape is established for landscape scenes.

The storage space of the electronic device is limited, and usually a few pop-up comment libraries corresponding to some image information may be stored. Based on this, the electronic device may determine whether the image information is preset or not, and if so, obtain the target pop-up comment from the pop-up comment library corresponding to the image information.

For example, the electronic device merely stores a pop-up comment library about food, and the electronic device may obtain matching pop-up comment from a local pop-up comment library during process of capturing food, and the electronic device cannot obtain matching the pop-up comment from the local pop-up comment library during process of capturing a landscape.

In the present embodiment, the electronic device locally stores a pop-up comment library, and the electronic device obtains pop-up comment from the local pop-up comment library, without interacting with the server, and independent from the network. Even if network connection is poor, the pop-up comment may still be obtained, and the pop-up comment may still be displayed.

In step 103, the image and the target pop-up comment are displayed.

After acquiring the image and the target pop-up comment, the electronic device displays the image and the target pop-up comment on the screen, thereby realizing the pop-up comment effect, increasing the feeling of interest and interaction during the capturing process, and improving the capturing experience of the user.

For example, Fig. 2 is an image displayed on a screen according to an exemplary embodiment, the image shown in Fig. 2 is a food image, and upon recognizing the content category information of the image as a food category, the electronic device obtains pop-up comment "I like eating meat" corresponding to the food category, and displays the pop-up comment "I like eating meat" on the image.

In an embodiment, the target pop-up comment may include comment information on content of the currently obtained image. In an example, multiple information forms of the target pop-up comment are provided, such as a text, an emotion icon, a symbol, etc. The target pop-up comment may further include a display mode of the comment information, for example, a display time, a pop-up position in the image, a pop-up direction, a pop-up speed, and the like.

When the target pop-up comment includes only the comment information, the comment information may be displayed on the screen according to a preset display mode. When the target pop-up comment includes the comment information and the display mode of the comment information, the comment information may be displayed on the screen according to the display mode involved in the target pop-up comment.

The electronic device may provide an editing entry for pop-up comment, such that the user may edit the pop-up comment in the local pop-up comment library, improving the use experience.

In an embodiment, multiple modes of displaying the image and the target pop-up comment are provided. For example, in a first display mode, the target pop-up comment is displayed on an upper layer of the image; in a second display mode, the image and the target pop-up comment are displayed in a partitioned region; in a third display mode, in a case where the electronic device includes two or more screens, the image and the target pop-up comment are displayed in a split screen.

For the second display mode, for example, the screen includes a first display region and a second display region, the image is displayed in the first display region and the target pop-up comment is displayed in the second display region.

For the third display mode, for example, an electronic device includes two screens, an image is displayed on one screen, and target pop-up comment is displayed on another screen.

The electronic device may provide an editing entry of the display mode, such that the user may edit the display mode, thereby improving the use experience.

In an embodiment, the electronic device may generate and store a capturing file according to the image and the target pop-up comment. The capturing file may be displayed in a pop-up manner. The capturing file may be a photo file and /or a video file.

In an example, methods of generating the capturing file based on the image and the target pop-up comment are provided. For example, the target pop-up comment is written into an image file of the image, and a capturing file is generated. In this example, the image file is modified. In another example, the target pop-up comment is written into the text, and the image file and the text of the image are combined, to generate a capturing file. In this example, the image file may carry the text.

For a photo in JPEG (Joint Photographic Experts Group) format, a length of the text carried with the target pop-up comment is written into metadata described in xmp (eXtensible Metadata Platform) of the image file of the photo, and the text data including the length of the text is added to the tail of the image file, thereby obtaining a photo file with a pop-up comment display.

When displaying a photo based on the photo file, after reading the metadata described in xmp, the electronic device reads length information in the metadata, and reads data of a corresponding length from the tail of the photo file, thereby obtaining a target pop-up comment, and displaying a pop-up comment based on the target pop-up comment.

An image file in HEIF (High Efficiency Image File) format supports the self-defined data as an independent data block. During capturing process, the target pop-up comment may be written into the text, and the image file and the text in the heif format are combined, such that a photo file with a pop-up comment display is obtained.

For a video encapsulation format supporting an internal self-defined data structure, a captured video may be encapsulated into such format, the target pop-up comment may be written into text, and a video file and the text written with pop-up comment may be combined, to obtain a video file with a pop-up comment display.

For example, the mkv encapsulation format is supported in an internal self-defined data structure, such as a multi-track, a multi-caption, etc., and a text written with the target pop-up comment and a video file in the mkv format are combined.

A capturing file is generated by combining an image file and a text written with pop-up comment, and the user controls the electronic device to turn on or turn off the pop-up comment display by triggering a preset option or key during the capturing process, and the image file is not affected.

In the embodiment of the present disclosure, the electronic device obtains an image captured during capturing process, obtains a target pop-up comment matching the image information of the image, and displays the image and the target pop-up comment, thereby increasing the interestingness and interaction at the capturing stage, and improving the capturing experience of the user.

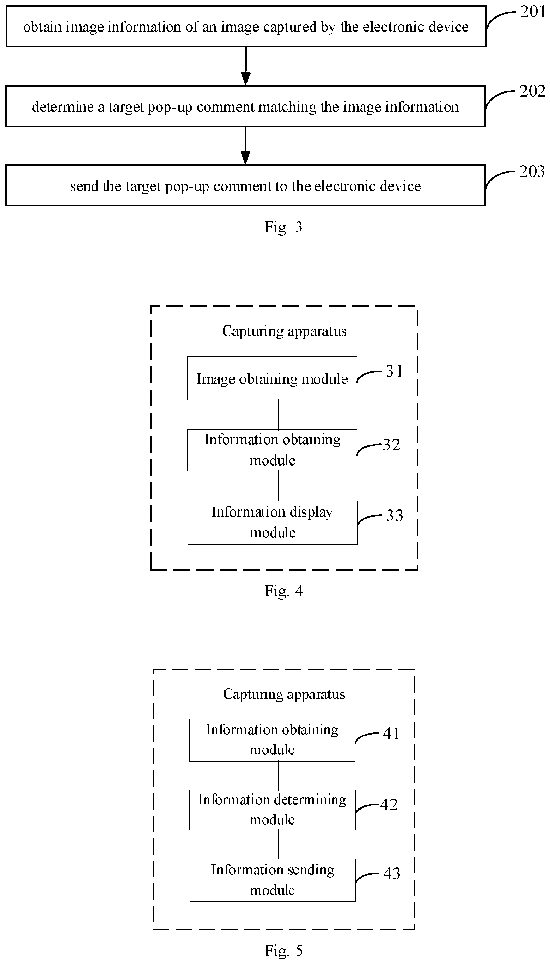

Fig. 3 is a flowchart of a capturing method according to an exemplary embodiment. The method shown in Fig. 1 is applicable to a server, and the method includes the following steps.

In step 201, image information of an image captured by an electronic device is obtained.

The image information may include at least one of: image data, capturing scene information, or image classification information. In an example, multiple types of image data are provided. For example, the image data may include at least one of: the image per se, the image color data, or the image brightness data, or the like. The capturing scene information indicates a specific capturing scene of the image. Image classification information indicates classification of the image. In an example, multiple types of image classification information are provided, for example, scene type information, content category information, etc.

In an example, methods for the server to obtain the image information of the image captured by the electronic device. For example, in the first method: the server receives the image information from the electronic device; in a second method, the server receives an image captured and sent by the electronic device, and determines image information of the image.

For the first method, after the electronic device captures an image, the electronic device obtains image information of the image, and sends the image information to the server. Accordingly, the server obtains the image information directly from the electronic device.

The image information in this method may include at least one of: image per se, image color data, image brightness data, capturing scene information, scene type information, or content category information, or the like.

For the second method, after the electronic device collects an image, the electronic device sends the image to the server. Accordingly, the server determines the image information according to the image from the electronic device.

The image information in this method may include at least one of: image color data, image brightness data, capturing scene information, scene type information, or content category information, etc.

In step 202, a target pop-up comment matching the image information is determined.

In an embodiment, the server pre-establishes a first correspondence between the image information and the pop-up comments. When executing this step, the server determines the target pop-up comment corresponding to the current image information according to the first correspondence.

For example, the server pre-establishes a correspondence between specified buildings and pop-up comments. In a practical application, when an image includes specified buildings, the server determines the pop-up comment corresponding to the specified buildings according to the correspondence between specified buildings and pop-up comments.

In this embodiment, the server directly determines the target pop-up comment based on the image information.

In an embodiment, the server pre-establishes a second correspondence between the image information types and the pop-up comments. When executing this step, the server determines the image information type corresponding to current image information, and determines the target pop-up comment corresponding to the image information type according to the pre-established second correspondence.

Here, the image information type may indicate an information category of the image, for example, the image information type may include at least one of an image content type or an image scene type, where the image content type indicates a content category of the image, and the image scene type indicates a capturing scene category of the image. In an example, the image information type may be set corresponding to the image classification information in the image information. For example, the classifying method of the image information type may be the same as the classifying method of the image classification information. For example, the classifying method of the image content type in the image information type may be the same as that of the content category information in the image classification information, and the classifying method of the image scene type in the image information type may be the same as that of the scene type information in the image classification information.

When the image information includes at least one of capturing scene information or scene type information, the image information type may include an image scene type. When the image information includes at least one of image data or content category information, the image information type may include an image content type.

For example, the server pre-establishes a correspondence between the food category and the pop-up comments. In a practical application, when the image involves the food, the server determines the food category corresponding to the food, and the server determines the pop-up comment corresponding to the food category according to the pre-established correspondence.

In this embodiment, the server determines an image information type according to the image information, and determines a target pop-up comment according to the image information type.

In an embodiment, the server may establish a second correspondence between the image information types and the pop-up comments in the following manner.

First, a target video is determined, where the target video includes pop-up comments.

The target video presents a pop-up comment when being played, and thus presents a pop-up comment effect. The target video may be a short video, a television, etc.

Some video websites may provide videos including pop-up comments, and a target video may be obtained from such websites.

Second, a target image frame set is obtained from the target video.

The server may determine image information of an image frame in the target video, further determine an image information type of the image frame, and collect the image frames with the same image information type to obtain a target image frame set.

In an example, it is determined that the image information types of continuously played multi-frame images in the target video are the same, and a target image frame set is obtained based on the multi-frame images.

For example, the server determines whether the image information types of the continuously played multi-frame images within a preset duration are the same, and if so, the server obtains a target image frame set based on the continuously played multi-frame images within the preset duration.

For another example, the server determines that the image information types of the continuously played preset number of image frames are the same, and obtains a target image frame set based on the continuously played preset number of image frames.

Exemplarily, the target video is a food recording video, and the server obtains the image content type of the multi-frame images continuously played within a preset duration as the food category, and obtains the target image frame set based on the multi-frame images continuously played within the preset duration.

In another example, images having the same image information type are acquired from a target video, and a target image frame set is obtained based on the images having the same image information type.

In this example, images having the same image information type may be a continuous frame or a discontinuous frame.

After determining the image information type of the image frame in the target video, the server may provide a label for the image frame, where the label indicates the image information type, and the server may obtain a target image frame set having the same image information type from the target video by identifying the label.

Further, pop-up comments in the target image frame set are extracted.

The pop-up comments may include comment information, and may further include a display mode of the comment information. In an example, multiple information forms of the comment information are provided, such as text, emoticon, symbol, etc. In an example, multiple display modes of the comment information are provided, for example, display time, a pop-up position in the image, a pop-up direction, a pop-up speed, and the like.

The server may extract the comment information only from the target image frame set, or may extract the comment information and the display mode thereof from the target image frame set.

Finally, a correspondence between an image information types and pop-up comments in a target image frame set is established.

The above method may establish a correspondence between sets of image information types and pop-up comments.

The pop-up comments in the target image frame set may be placed in the target pop-up comment library by the server, where the target pop-up comment library is established for the image information type of the target image frame set. Through the above method, respective pop-up comment libraries may be established for different types of image information.

In step 203, the target pop-up comment is sent to the electronic device.

In the embodiments of the present disclosure, the server obtains image information of an image captured by the electronic device, determines a target pop-up comment matching the image information, and sends the target pop-up comment to the electronic device, such that the electronic device displays the image and the target comment information on the screen, presenting a pop-up comment display effect, thereby increasing the interestingness and interaction at the capturing stage, and improving the user's capturing experience.

The foregoing method embodiments are expressed as a series of combinations of actions for simplicity, but those skilled in the art should understand that the present disclosure is not limited by the described order of actions, because some steps may be performed in other order or simultaneously according to the present disclosure.

Further, those skilled in the art should also understand that the embodiments described in the description belong to optional embodiments, and the acts and modules involved are not necessarily required in the present disclosure.

Corresponding to the foregoing method embodiment for implementing an application function, embodiments of an apparatus for implementing the application function and a corresponding device, such as electronic device and server, are provided according to the present disclosure.

Fig. 4 is a block diagram of a capturing apparatus according to an exemplary embodiment, applicable to an electronic device, the apparatus including: an image obtaining module 31, an information obtaining module 32 and an information display module 33.

The image obtaining module 31 is configured to obtain an image captured during capturing process.

The information obtaining module 32 is configured to obtain a target pop-up comment matching the image information of the image.

The information display module 33 is configured to display the image and the target pop-up comment.

In an embodiment, on the basis of the capturing apparatus shown in Fig. 4, the image information includes at least one of: image data, capturing scene information, or image classification information.

In an embodiment, the image information may include the image classification information, and the information obtaining module 32 may include one of: a first information determining sub-module and a second information sub-module.

The first information determining sub-module is configured to, in case where the image classification information includes content category information, determine the content category information of the image according to a content of the image.

The second information determining sub-module is configured to, in case where the image classification information includes scene classification information, determine the capturing scene information of the image according to the content of the image, and determine the scene classification information corresponding to the capturing scene information.

In an embodiment, on the basis of the capturing apparatus shown in Fig. 4, the information obtaining module 32 may include any one of: a sending sub-module and an obtaining sub-module.

The sending sub-module is configured to send the image information to a server, such that the server obtains the target pop-up comment matching the image information, and receiving the target pop-up comment from the server.

The obtaining sub-module is configured to determine whether the image information conforms the preset image information, and if the image information conforms the preset image information, obtain the target pop-up comment from a pop-up comment library corresponding to the preset image information.

In an embodiment, on the basis of the capturing apparatus shown in Fig. 4, the apparatus may further include a file generating module and a file storing module.

The file generation module is configured to generate a capturing file based on the image and the target pop-up comment.

The file storing module is configured to store the capturing file.

In an embodiment, the file generating module may include any one of an information writing sub-module and a text combining sub-module.

The information writing sub-module is configured to write the target pop-up comment into an image file of the image to generate the capturing file;

The text combining sub-module is configured to write the target pop-up comment into a text, and combine the image file of the image and the text, to generate the capturing file.

Fig. 5 is a block diagram of another capturing apparatus according to an exemplary embodiment. The apparatus is applicable to a server, and includes an information obtaining module 41, an information determining module 42, and an information sending module 43.

The information obtaining module 41 is configured to obtain image information of an image captured by the electronic device.

The information determining module 42 is configured to determine a target pop-up comment matching the image information.

The information sending module 43 is configured to send the target pop-up comment to the electronic device.

In an embodiment, on the basis of the capturing apparatus shown in Fig. 5, the information obtaining module 41 may include any one of an information receiving sub-module and an information determining sub-module.

The information receiving sub-module is configured to receive the image information from the electronic device.

The information determining sub-module is configured to receive the image captured from the electronic device, and determine the image information of the image.

In an embodiment, on the basis of the capturing apparatus shown in Fig. 5, the information determining module 42 may include any one of: a first pop-up comment determining sub-module and a second pop-up comment determining sub-module.

The first pop-up comment determining sub-module is configured to determine the target pop-up comment corresponding to the image information according to a pre-established first correspondence between image information and pop-up comments.

The second pop-up comment determining sub-module is configured to determine image information type corresponding to the image information, and determine the target pop-up comment corresponding to the image information type according to a pre-established second correspondence between the image information types and the pop-up comments.

In an embodiment, the apparatus may further include a video determination module, a set obtaining module, an information extracting module, and a relationship establishment module.

The video determination module is configured to determine a target video, where the target video includes pop-up comment.

The set obtaining module is configured to obtain a target image frame set from the target video.

The information extracting module is configured to extract the pop-up comment from the target image frame set.

The relationship establishing module is configured to establish the second correspondence between the image information types and the pop-up comments of the target image frame set.

In an embodiment, the set obtaining module may include any one of a first set obtaining sub-module and a second set obtaining sub-module.

The first set obtaining sub-module is configured to determine that image information types of multiple frames of images continuously played in the target video are the same, and obtaining the target image frame set based on the multiple frames of images.

The second set obtaining sub-module is configured to obtain images with the same image information type from the target video, and obtaining the target image frame set based on the images with the same image information type.

For the above embodiment, since the apparatus substantially corresponds to the method embodiment, reference may be made to a part of the description of the method embodiment. The apparatus embodiments described above are merely schematic, in which the units described as separate components may or may not be physically separated, and the components displayed as units may or may not be physical units, may be located in one place, or may be distributed to a plurality of network units. Some or all of the modules may be selected according to actual needs to achieve the purpose of the solution of the present disclosure. A person skilled in the art will understand and implement without creative efforts.

Accordingly, an electronic device is provided according to an embodiment of the present disclosure, which includes a screen, a camera, a processor and a memory for storing instructions executed by the processor; where by executing the instructions corresponding to a control logic for capturing, the processor is configured to
obtain an image captured during capturing process;
obtain a target pop-up comment matching image information of the image;
display the image and the target pop-up comment.

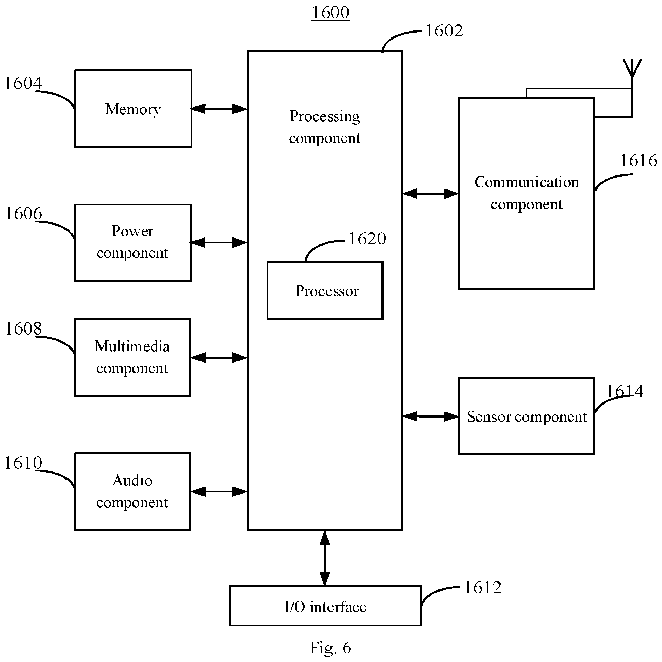

FIG. 6 is a structural diagram of an electronic device 1600 according to an exemplary example. For example, the electronic device 1600 may be a client device, and may specifically be a mobile phone, a computer, a digital broadcasting terminal, a message receiving and transmitting device, a game console, a tablet device, a medical device, a fitness device, a personal digital assistant, an internet of things device, a wearable device such as a smart watch, a smart glass, a smart band, a smart running shoe, and so on.

Referring to FIG. 6, the electronic device 1600 may include one or more of the following components: a processing component 1602, a memory 1604, a power supply component 1606, a multimedia component 1608, an audio component 1610, an input/output (I/O) interface 1612, a sensor component 1614, and a communication component 1616.

The processing component 1602 generally controls overall operations of the electronic device 1600, such as operations associated with display, phone calls, data communications, camera operations, and recording operations. The processing component 1602 may include one or more processors 1620 to execute instructions to complete all or part of the steps of the above methods. In addition, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is to store various types of data to support the operation of the electronic device 1600. Examples of such data include instructions for any application or method operated on the electronic device 1600, contact data, phonebook data, messages, pictures, videos, and so on. The memory 1604 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power supply component 1606 provides power to different components of the electronic device 1600. The power supply component 1606 may include a power management system, one or more power supplies, and other components associated with generating, managing, and distributing power for the electronic device 1600.

The multimedia component 1608 includes a screen providing an output interface between the electronic device 1600 and a user. In some examples, the screen may include a Liquid Crystal Display (LCD) and a Touch Panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a duration and a pressure associated with the touch or swipe. In some examples, the multimedia component 1608 may include a front camera and/or a rear camera. The front camera and/or rear camera may receive external multimedia data when the electronic device 1600 is in an operating mode, such as a capturing mode or a video mode. Each of the front camera and the rear camera may be a fixed optical lens system or have focal length and optical zooming capability.

The audio component 1610 is configured to output and/or input an audio signal. For example, the audio component 1610 includes a microphone (MIC). When the electronic device 1600 is in an operating mode, such as a call mode, a recording mode, and a voice recognition mode, the MIC is to receive an external audio signal. The received audio signal may be further stored in the memory 1604 or sent via the communication component 1616. In some examples, the audio component 1610 further includes a speaker to output an audio signal.

The I/O interface 1612 may provide an interface between the processing component 1602 and peripheral interface modules. The above peripheral interface modules may include a keyboard, a click wheel, buttons and so on. These buttons may include, but are not limited to, a home button, a volume button, a starting button and a locking button.

The sensor component 1614 includes one or more sensors to provide status assessments of various aspects for the electronic device 1600. For example, the sensor component 1614 may detect the on/off status of the electronic device 1600, and relative positioning of component, for example, the component is a display and a keypad of the electronic device 1600. The sensor component 1614 may also detect a change in position of the electronic device 1600 or a component of the electronic device 1600, a presence or absence of the contact between a user and the electronic device 1600, an orientation or an acceleration/deceleration of the electronic device 1600, and a change in temperature of the electronic device 1600. The sensor component 1614 may include a proximity sensor to detect the presence of a nearby object without any physical contact. The sensor component 1614 may further include an optical sensor, such as a Complementary Metal-Oxide-Semiconductor (CMOS) or Charged Coupled Device (CCD) image sensor which is used in imaging applications. In some examples, the sensor component 1614 may further include an acceleration sensor, a gyroscope sensor, a magnetic sensor, a pressure sensor, or a temperature sensor.

The communication component 1616 is to facilitate wired or wireless communication between the electronic device 1600 and other devices. The electronic device 1600 may access a wireless network that is based on a communication standard, such as Wi-Fi, 2G or 3G, or a combination thereof. In an example, the communication component 1616 receives a broadcast signal or broadcast-associated information from an external broadcast management system via a broadcast channel. In an example, the communication component 1616 further includes a Near Field Communication (NFC) module to facilitate short-range communications. For example, the NFC module may be implemented based on a Radio Frequency Identification (RFID) technology, an Infrared Data Association (IrDA) technology, an Ultra Wideband (UWB) technology, a Bluetooth^{®} (BT) technology and other technologies.

In an example, the electronic device 1600 may be implemented by one or more Application Specific Integrated Circuits (ASIC), Digital Signal Processors (DSP), Digital Signal Processing Devices (DSPD), programmable Logic Devices (PLD), Field Programmable Gate Arrays (FPGA), controllers, microcontrollers, microprocessors, or other electronic components for performing the above methods.

In an example, a non-transitory computer-readable storage medium including instructions is provided, such as a memory 1604 including instructions. The above instructions may be executed by the processor 1620 of the electronic device 1600 to perform the capturing method of: obtaining an image captured during capturing process, obtaining a target pop-up comment matching image information of the image, and displaying the image and the target pop-up comment.

The non-transitory computer-readable storage medium may be a Read-Only Memory (ROM), a Random Access Memory (RAM), a Compact disc ROM (CD-ROM), a magnetic tape, a floppy disk, and an optical data storage device and so on.

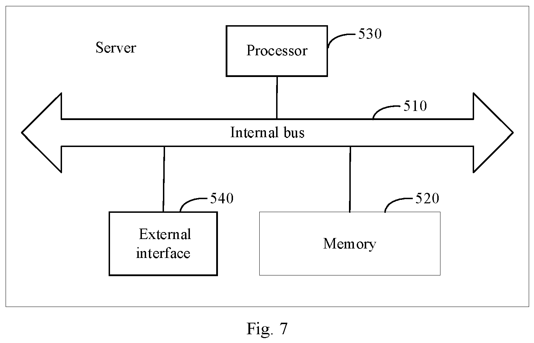

Accordingly, a server is provided according to the present disclosure. FIG. 7 is a schematic structural diagram of the server according to an exemplary embodiment. The server shown in FIG. 7 may include: a memory 520, a processor 530, and an external interface 540 connected through internal bus 510;

The external interface 540 is configured to obtain data;

The memory 520 is configured to store machine-readable instructions corresponding to capturing.

The processor 530 is configured to read the machine readable instructions on the memory 520 and execute the instructions corresponding to a control logic for capturing to implement the following operations:
obtaining image information of an image captured by the electronic device;
determining a target pop-up comment matching the image information;
sending the target pop-up comment to the electronic device.

The non-transitory computer-readable storage medium may be a Read-Only Memory (ROM), a Random Access Memory (RAM), a Compact disc ROM (CD-ROM), a magnetic tape, a floppy disk, and an optical data storage device and so on.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise structure described above and shown in the accompanying drawings, and that various modifications and changes may be made without departing from the scope thereof. The scope of the present disclosure is limited only by the appended claims.

## Claims

1. A capturing method, applicable to an electronic device, and the method comprising:
obtaining an image captured during capturing process;
obtaining a target pop-up comment matching image information of the image; and
displaying the image and the target pop-up comment.

2. The method according to claim 1, wherein the image information comprises at least one of: image data, capturing scene information, or image classification information.

3. The method according to claim 2, wherein the image information comprises the image classification information, which is obtained by one of:
in case where the image classification information comprises content category information,
determining the content category information of the image according to a content of the image; or
in case where the image classification information comprises scene classification information,
determining the capturing scene information of the image according to the content of the image, and
determining the scene classification information corresponding to the capturing scene information.

4. The method according to claim 1, wherein the obtaining of a target pop-up comment matching the image information of the image comprises one of:
sending the image information to a server, such that the server obtains the target pop-up comment matching the image information, and receiving the target pop-up comment from the server; or
determine whether the image information conforms a preset image information,
if the image information conforms the preset image information, obtaining the target pop-up comment from a pop-up comment library corresponding to the preset image information.

5. The method according to claim 1, further comprising:
generating a capturing file based on the image and the target pop-up comment; and
storing the capturing file.

6. The method according to claim 5, wherein the generating of the capturing file based on the image and the target pop-up comment comprises one of:
writing the target pop-up comment into an image file of the image to generate the capturing file; or
writing the target pop-up comment into a text, and combining the image file of the image and the text, to generate the capturing file.

7. A capturing method, applicable to a server, and the method comprising:
obtaining image information of an image captured by the electronic device;
determining a target pop-up comment matching the image information; and
sending the target pop-up comment to the electronic device.

8. The method according to claim 7, wherein the obtaining of the image information of the image captured by the electronic device comprises one of:
receiving the image information from the electronic device; or
receiving the image captured from the electronic device, and determining the image information of the image.

9. The method according to claim 7, wherein the determining of the target pop-up comment matching the image information comprises one of:
determining the target pop-up comment corresponding to the image information according to a pre-established first correspondence between image information and pop-up comments; or
determining image information type corresponding to the image information, and determining the target pop-up comment corresponding to the image information type according to a pre-established second correspondence between the image information types and the pop-up comments.

10. The method according to claim 9, further comprising:
determining a target video, wherein the target video comprises pop-up comments;
obtaining a target image frame set from the target video;
extracting the pop-up comments from the target image frame set;
establishing the second correspondence between the image information types and the pop-up comments of the target image frame set.

11. The method according to claim 10, wherein the obtaining of the target image frame set from the target video comprises one of:
determining that image information types of multiple frames of images continuously played in the target video are the same, and obtaining the target image frame set based on the multiple frames of images; or
obtaining images with the same image information type from the target video, and obtaining the target image frame set based on the images with the same image information type.

12. A capturing apparatus, applicable to an electronic device, and the apparatus comprising:
an image obtaining module, configured to obtain an image captured during capturing process;
an information obtaining module, configured to obtain a target pop-up comment matching the image information of the image;
an information displaying module, configured to display the image and the target pop-up comment.

13. The apparatus according to claim 12, wherein the image information comprises at least one of: image data, capturing scene information, or image classification information.

14. The apparatus according to claim 13, wherein the image information comprises the image classification information, and the information obtaining module comprises one of:
a first information determining sub-module, configured to, in case where the image classification information comprises content category information, determine the content category information of the image according to a content of the image; or
a second information determining sub-module, configured to, in case where the image classification information comprises scene classification information, determine the capturing scene information of the image according to the content of the image, and determine the scene classification information corresponding to the capturing scene information.

15. The apparatus according to claim 12, wherein the information obtaining module comprises one of:
a sending sub-module, configured to send the image information to a server, such that the server obtains the target pop-up comment matching the image information, and receiving the target pop-up comment from the server; or
an obtaining sub-module, configured to determine whether the image information conforms the preset image information, and if the image information conforms the preset image information, obtain the target pop-up comment from a pop-up comment library corresponding to the preset image information.

16. The apparatus according to claim 12, further comprising:
a file generating module, configured to generate a capturing file based on the image and the target pop-up comment;
a file storing module, configured to store the capturing file.

17. The apparatus according to claim 16, wherein the file generation module comprises one of:
an information writing sub-module, configured to write the target pop-up comment into an image file of the image to generate the capturing file; or
a text combining sub-module, configured to write the target pop-up comment into a text, and combine the image file of the image and the text, to generate the capturing file.

18. A capturing apparatus, applicable to a server, and the apparatus comprising:
an information obtaining module, configured to obtain image information of an image captured by the electronic device;
an information determining module, configured to determine a target pop-up comment matching the image information;
an information sending module, configured to send the target pop-up comment to the electronic device.

19. The apparatus according to claim 18, wherein the information obtaining module comprises one of:
an information receiving sub-module, configured to receive the image information from the electronic device; or
an information determining sub-module, configured to receive the image captured from the electronic device, and determine the image information of the image.

20. The apparatus according to claim 18, wherein the information determining module comprises one of:
a first pop-up comment determining sub-module, configured to determine the target pop-up comment corresponding to the image information according to a pre-established first correspondence between image information and pop-up comments; or
a second pop-up comment determining sub-module, configured to determine image information type corresponding to the image information, and determine the target pop-up comment corresponding to the image information type according to a pre-established second correspondence between the image information types and the pop-up comments.

21. The apparatus according to claim 20, further comprising:
a video determining module, configured to determine a target video, wherein the target video comprises pop-up comments;
a set obtaining module, configured to obtain a target image frame set from the target video;
an information extracting module, configured to extract the pop-up comments from the target image frame set;
a relationship establishing module, configured to establish the second correspondence between the image information types and the pop-up comments of the target image frame set.

22. The apparatus according to claim 21, wherein the set obtaining module comprises one of:
a first set obtaining sub-module, configured to determine that image information types of multiple frames of images continuously played in the target video are the same, and obtaining the target image frame set based on the multiple frames of images; or
a second set obtaining sub-module, configured to obtain images with the same image information type from the target video, and obtaining the target image frame set based on the images with the same image information type.

23. A non-transitory computer-readable storage medium on which a computer program is stored, wherein the computer program is executed by a processor to perform the method according to any one of claims 1 to 6.

24. A non-transitory computer-readable storage medium on which a computer program is stored, wherein the computer program is executed by a processor to perform the method according to any one of claims 7 to 11.

25. An electronic device, comprising:
a processor;
a memory for storing executable instructions that is executable by the processor to perform operations comprising;
obtaining an image captured during capturing process;
obtaining a target pop-up comment matching image information of the image;
displaying the image and the target pop-up comment.

26. A server, comprising:
a processor;
a memory for storing executable instructions that is executable by the processor to perform operations comprising:
obtaining image information of an image captured by the electronic device;
determining a target pop-up comment matching the image information;
sending the target pop-up comment to the electronic device.
